# DEMANDE DE BREVET EUROPEEN

(11) **EP 1 307 051 A2**
(43) Date de publication de la demande: **02.05.2003**
(21) Numéro de dépôt: 02079270.1
(22) Date de dépôt: 16.10.2002
(51) Int. Cl.: H04N 7/24

(54) **Procédé de copie de données numériques compressées.**

(30) Priorité: 23.10.2001 FR 0113673
(71) Demandeur: Koninklijke Philips Electronics N.V., 5621 BA Eindhoven (NL)
(72) Inventeur: Gobert, Jean, 75008 Paris (FR)
(74) Mandataire: Landousy, Christian

(57) **Abrégé**

La présente invention concerne un procédé de copie de données numériques compressées sur un support d'information. Lesdites données numériques ont été compressées par fragments successifs selon un format de compression échelonnable, un fragment selon ledit format comporte une couche de base et au moins une couche d'amélioration. Le procédé de copie selon l'invention comprend une étape de suppression d'une partie de la au moins une couche d'amélioration. Il comprend ensuite une étape de copie de la couche d'amélioration ainsi tronquée sur un support d'information de destination. Ces étapes sont itérées pour tout ou partie des fragments constituant le signal numérique multimédia.

## Description

### Domaine technique de l'invention

La présente invention concerne un procédé de copie de données numériques compressées sur un support d'information. Elle concerne également le dispositif lui correspondant.

Elle trouve notamment son application dans les appareils permettant l'enregistrement, sur des supports d'information de type disques CD ou DVD, de données numériques de type audio ou vidéo compressées selon une technique de codage comme la norme MPEG (de l'anglais 'Moving Pictures Expert Group') par exemple. Elle vise plus particulièrement la copie desdites données numériques compressées en vue de dégrader l'information qu'elles contiennent à l'origine.

### Etat de la technique antérieure

Les techniques de codage de données numériques permettent aujourd'hui d'obtenir des copies d'oeuvres multimédias d'excellente qualité. Avec l'apparition des dispositifs d'enregistrement de données numériques multimédia, il existe un réel risque de voir une diffusion à grande échelle de copies d'oeuvres multimédias au mépris de la législation sur le droit d'auteur. Le risque est d'autant plus grand que la qualité de recopie reste constante à chaque génération de copie, au contraire des supports analogiques tels que les cassettes audio ou vidéo où la qualité se dégrade à chaque génération de copie.

La demande de brevet japonaise publiée sous le numéro 2000-182325 décrit un dispositif de copie de données numériques compressées de type MP3 sur un support d'information de type DVD. Ledit dispositif comprend une mémoire flash contenant les données numériques compressées. Il comprend également un contrôleur et un décodeur MP3, ledit contrôleur amenant le décodeur MP3 à décoder les données numériques compressées contenues dans la mémoire flash. Il comprend enfin un circuit de détérioration permettant de dégrader la qualité du son à chaque génération de copie grâce à un filtrage des données numériques décompressées issues du décodeur MP3.

Un tel dispositif nécessite de décoder les données numériques compressées. Il présente donc l'inconvénient d'être particulièrement complexe et coûteux à mettre en oeuvre.

### Exposé de l'invention

La présente invention a pour but de proposer un procédé et un dispositif de copie de données numériques compressées sur un support d'information, qui soient à fois particulièrement simples et efficaces.

A cet effet, le procédé de copie de données numériques compressées selon l'invention est remarquable en ce que lesdites données numériques ont été compressées par fragments successifs selon un format de compression échelonnable (en anglais 'scalable'), un fragment selon ledit format comportant une couche de base et au moins une couche d'amélioration, et en ce que ledit procédé comprend une étape de suppression d'une partie de la au moins une couche d'amélioration.

Selon ledit format de compression échelonnable, le signal numérique multimédia de qualité optimale correspond à la somme de la couche de base et de la au moins une couche d'amélioration. Ainsi, grâce au procédé de copie de données numériques compressées selon l'invention, une partie seulement d'un fragment de données numériques compressées va être conservée pour l'enregistrement, ledit fragment correspondant par exemple à une image. Cette partie de fragment correspond, par exemple, à la couche de base, à certaines couches d'amélioration et éventuellement une partie d'une couche d'amélioration. Le signal numérique multimédia ainsi obtenu sera ainsi de qualité moindre que le signal numérique multimédia d'origine. De plus, le procédé de copie effectue l'étape de suppression à chaque génération de copie, ce qui fait que la qualité du signal d'une copie de copie est moindre que celle de la copie qui a servi de base à l'enregistrement.

La présente invention a également pour objet la mise en oeuvre du procédé de copie de données numériques compressées, sous la forme d'un circuit intégré par exemple, à l'aide de moyens matériels (en anglais'hardware') ou logiciels (en anglais 'software').

### Brève description des dessins

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :
- la Fig. 1 illustre le résultat de copies successives de données numériques compressées selon le procédé de copie de l'invention,
- la Fig. 2 est un diagramme représentant un procédé de transcodage de données numériques compressées selon un format de compression non-échelonnable en données numériques compressées selon un format de compression échelonnable, et
- la Fig. 3 est un diagramme représentant un procédé de décodage de données numériques compressées selon un format de compression échelonnable.

### Exposé détaillé d'au moins un mode de réalisation de l'invention

La présente invention concerne un procédé de copie de données numériques compressées sur un support d'information en vue de dégrader, à chaque génération de copie, l'information qu'elles contiennent à l'origine. Les données numériques compressées peuvent provenir d'un support d'information source ou être téléchargée à partir d'un réseau de communication de type Internet par exemple.

La présente invention peut également s'appliquer au stockage d'un ensemble de données numériques compressées sur un support d'information de taille limitée en vue de pouvoir stocker ledit ensemble sous un format réduit, ceci en fonction de la capacité de stockage disponible sur ledit support.

L'invention a été développée plus particulièrement dans le cadre de la norme MPEG pour des signaux numériques vidéo mais d'autres techniques de compression sont également possibles. Ainsi, le procédé de copie selon l'invention s'applique à tout signal numérique multimédia comprenant des données numériques qui ont été compressées par fragments successifs selon un format de compression échelonnable. Un fragment correspond, par exemple, à une image d'une séquence d'images dans le cas de la norme MPEG2. Un fragment peut également correspondre à un objet vidéo ou VOP à l'intérieur de l'image dans le cas de la norme MPEG4. Il apparaîtra à l'homme du métier que ledit fragment peut correspondre à un autre découpage du signal numérique multimédia. L'invention est particulièrement intéressante pour une compression échelonnable du type à grain fin, c'est-à-dire quand une couche d'amélioration est décodable partiellement par troncature. D'autres formats échelonnables ne permettent pas une telle flexibilité et les couches d'amélioration sont à décoder en totalité ou pas du tout, ce qui rend l'invention moins intéressante mais néanmoins applicable.

Chaque fragment doit comprendre des données numériques qui ont été préalablement compressées selon le format de compression échelonnable. Il peut s'agir, à titre d'exemple, du format de compression échelonnable défini dans le document « INTERNATIONAL ORGANISATION FOR STANDARDISATION ISO/IEC JTC1/SC29/WG11 CODING OF MOVING PICTURES AND AUDIO», N3317, Mars 2000, FGS Verification Model, document appelé par la suite norme FGS. Le résultat de la compression d'un fragment contenant les données numériques d'origine est un fragment contenant des données numériques compressées et comportant une couche de base et au moins un couche d'amélioration. Le procédé de copie selon l'invention comprend une étape de suppression d'une partie de la au moins une couche d'amélioration. Il comprend ensuite une étape de copie de la couche d'amélioration ainsi tronquée sur un support d'information de destination. Ces étapes sont itérées pour tout ou partie des fragments constituant le signal numérique multimédia.

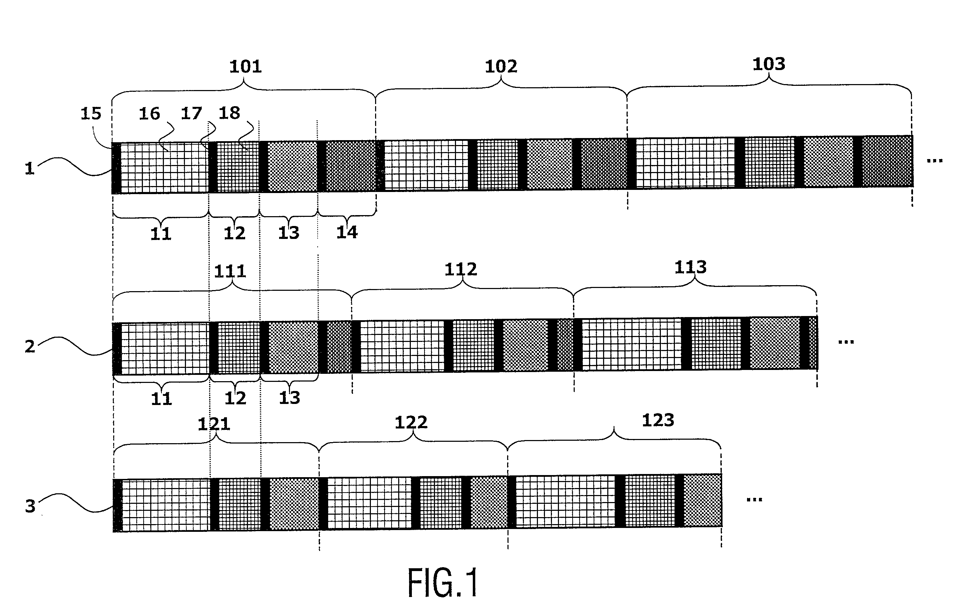

La Fig. 1 illustre le résultat de copies successives effectuées sur un support d'information selon le procédé de copie de données numériques compressées de l'invention. Le signal numérique multimédia d'origine (1) comprend plusieurs fragments (101,102,103), chaque fragment comprenant, ici séquentiellement, une couche de base (11), constituée d'un entête (15) et de données compressées (16), et des couches d'amélioration (12,13,14), constituées elles aussi chacune (12) d'un entête (17) et de données compressées (18).

Le signal numérique multimédia issu d'une première copie (2) est constitué de fragments tronqués successifs (111,112,113) comprenant chacun une fraction r du nombre de bits des fragments (101,102,103) leur correspondant dans le signal d'origine. Un fragment tronqué (111) contient, par exemple, une couche de base (11), 2 couches d'amélioration (12,13) et le reste d'une couche d'amélioration (14). Cette répartition peut être différente d'un fragment à un autre. En effet, les fragments, de même que les couches de base et d'amélioration qui les constituent, sont de taille variable du fait de la compression. De plus, le rapport r peut être variable d'un fragment à un autre.

Le signal numérique multimédia issu d'une seconde copie (3) est constitué de fragments tronqués successifs (121,122,123) comprenant également chacun une fraction r du nombre de bits des fragments (111,112,113) leur correspondant dans le signal issu de la première copie. Le procédé de copie est itéré à chaque génération de copie. Tant que la couche de base n'est tronquée dans aucun fragment, un décodage reste possible. En effet, la couche de base est essentielle pour le décodage du fragment alors que les couches d'améliorations viennent éventuellement s'additionner à la couche de base leur correspondant.

Dans le mode de réalisation illustré à la Fig. 1, l'étape de suppression est apte à conserver les m premiers bits parmi les n bits du fragment de données numériques compressées. Dans le mode de réalisation préféré, l'étape de suppression est apte à conserver les m premiers bits parmi les n bits de l'ensemble d'au moins une couche d'amélioration de manière à ne pas toucher à la couche de base. De même que dans le cas précédent, le rapport r égal à m sur n peut être fixe ou variable pour des fragments successifs selon que l'on veut obtenir une qualité du signal copié constante ou variable. Ainsi, à chaque génération de copie, seule une fraction r du nombre de bits d'un fragment courant ou d'une couche d'amélioration courante, située au début dudit fragment ou de ladite couche, est conservée. Pour cela, l'étape de suppression est apte à identifier le début d'un fragment ou d'un ensemble d'au moins une couche d'amélioration et le début dudit fragment ou dudit ensemble qui le suit immédiatement. Dans le cas d'un fragment, cette identification est effectuée, par exemple, grâce au paramètre picture_start_code situé dans un entête de la couche de base. Selon un autre exemple, un flux de données auxiliaires 'metadata' accompagne le ou les flux de données numériques compressées, et contient l'adresse de début et la longueur desdits fragments ou ensembles de couches d'améliorations. Ces données auxiliaires font partie d'une couche système, et sont utilisées par ailleurs pour sauter d'une image à l'autre par exemple.

Le procédé de copie selon la présente invention présente ainsi l'avantage que la suppression de données numériques compressées peut être effectuée avec une connaissance minimale du flux de données numériques compressées, et sans un décodage complet dudit flux. L'étape de suppression peut être réalisée par une partie d'un lecteur-enregistreur complètement indépendante de l'enregistrement lui-même, telle qu'un gestionnaire de fichier par exemple.

Dans un autre mode de réalisation, l'étape de suppression est apte à enlever les bits correspondant à la dernière ou aux dernières couches d'amélioration, soit un nombre entier de couches d'amélioration, notamment lorsque ces couches d'amélioration ne sont pas exploitables lorsqu'elles sont tronquées. Dans ce cas, il est nécessaire d'identifier le début des couches d'amélioration. Dans la norme FGS, il existe deux paramètres de début de couches d'amélioration, fgs_vop_start_code et fgs_bp_start_code, correspondant respectivement au début de la couche d'amélioration d'un objet vidéo ou VOP à l'intérieur d'une image, et au début d'une sous-couche d'amélioration dudit objet vidéo. Ainsi, l'étape de suppression est également apte à enlever les bits correspondant à la dernière ou aux dernières sous-couches d'amélioration.

Dans le mode de réalisation préféré, le signal numérique multimédia contient des données numériques directement issues d'une compression selon un format de codage échelonnable. Selon une première solution, deux flux de données numériques compressées sont disponibles indépendamment l'un de l'autre, ces flux correspondant respectivement à une succession de couches de base et à une succession d'ensembles d'au moins une couche d'amélioration. L'étape de suppression est alors appliquée directement aux ensembles du second flux cité. Selon une seconde solution, une couche de base et l'ensemble d'au moins une couche d'amélioration lui correspondant sont multiplexées de manière à former un fragment de données numériques compressées selon le format échelonnable, comportant séquentiellement la couche de base et l'ensemble d'au moins une couche d'amélioration. L'étape de suppression est alors appliquée au fragment selon le principe de la Fig. 1.

Dans un mode de réalisation particulièrement avantageux, le signal numérique multimédia contient des données numériques qui ne sont pas compressées selon un format de compression échelonnable mais selon un format de compression non-échelonnable de type MPEG par exemple. Le procédé de copie de données numériques compressées inclut alors un procédé de transcodage apte à transformer les données numériques compressées selon le format de compression non-échelonnable en données numériques compressées selon le format de compression échelonnable. Une fois ce procédé de transcodage effectué, le signal transcodé sera disponible au format échelonnable pour les générations suivantes de copie.

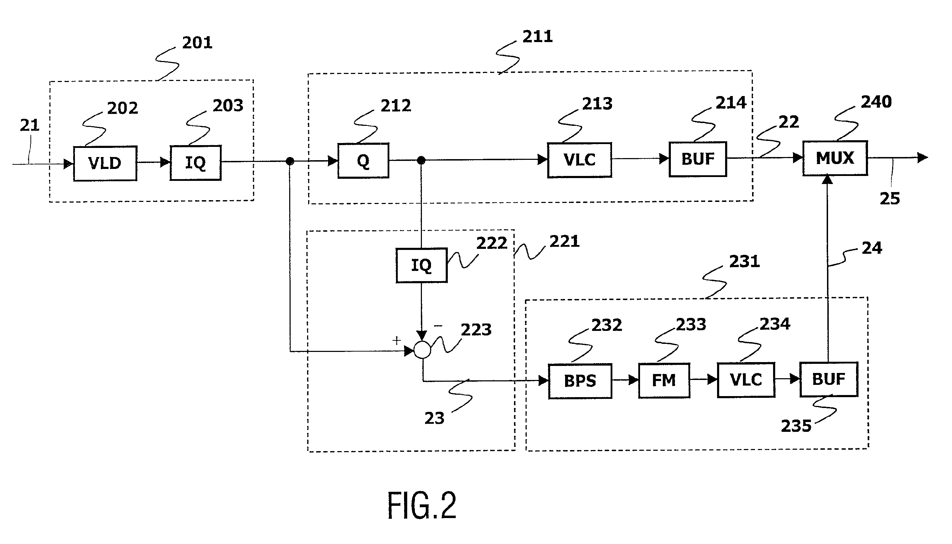

Le procédé de transcodage est illustré à la Fig. 2. Il comprend les étapes de :
- décodage d'erreur (201), apte à décoder le signal numérique multimédia contenant les données numériques compressées selon le format de compression non-échelonnable (21) afin de fournir des données numériques décompressées, ladite étape de décodage d'erreur comprenant en série les sous-étapes de décodage à longueur variable VLD (202) et de quantification inverse IQ (203) selon un premier pas de quantification q1,
- premier ré-encodage (211), en série avec l'étape de décodage d'erreur (201), apte à délivrer des données numériques compressées correspondant à une couche de base (22), ladite étape de premier ré-encodage comprenant en série les sous-étapes de quantification Q (212) selon un second pas de quantification q2 supérieur au pas de quantification q1 afin de dégrader la qualité du signal d'entrée (21), de codage à longueur variable VLC (213), et de stockage BUF (214) des données numériques compressées correspondant à une couche de base (22),
- reconstruction (221) apte à fournir une erreur de codage (23) de la couche de base, ladite étape de reconstruction comprenant en série les sous-étapes de quantification inverse IQ (222) des données issues de la quantification Q (212), et de soustraction (223) des données en sortie de la sous-étape de quantification inverse IQ (222) aux données en entrée de la sous-étape de quantification Q (212),
- second ré-encodage (231) des données en sortie de l'étape de soustraction (223), apte à délivrer des données numériques compressées correspondant à une couche d'amélioration (24).
Selon un mode de réalisation conforme à la norme FGS, l'étape de second ré-encodage traite des blocs contenant, par exemple, 8 x 8 coefficients DCT correspondant aux erreurs de codage (23). Elle comprend en série les sous-étapes de :
- décalage vers la gauche BPS (232) de bits définissant les coefficients DCT en fonction de leur fréquence, c'est à dire en fonction de leur position dans un bloc, une matrice 8 x 8 représentant les valeurs des décalages étant stockée dans l'en-tête de l'ensemble des couches d'amélioration d'un fragment de données numériques compressées,
- décomposition FM (233) en un minimum de plans binaires, le nombre de plans binaires étant déterminé à partir du coefficient DCT le plus grand après décalage (un coefficient DCT égal à 10 donne, par exemple, 4 plans binaires), les plans binaires étant formés du plan binaire MSB contenant les bits de poids fort des coefficients DCT (64 dans notre exemple) jusqu'au plan binaire LSB contenant les bits de poids faible desdits coefficients,
- codage à longueur variable VLC (234) des plans binaires, après conversions des dits plans binaires en symbole 2D (RUN,EOP) où RUN correspond au nombre de '0' consécutifs précédent un '1', et EOP est une valeur binaire correspondant à la présence ou l'absence de 1 dans la suite du plan binaire,
- stockage BUF (235) des plans binaires codés, une sous-couche d'amélioration correspondant dans notre exemple à un plan binaire codé.
La couche de base et la couche d'amélioration sont éventuellement multiplexées (241) de manière à former un fragment (25) de données numériques compressées selon le format échelonnable, comportant séquentiellement la couche de base et la couche d'amélioration. Elles peuvent également, comme précédemment, être traitées indépendamment par la suite, l'étape de suppression ne s'appliquant qu'à la couche d'amélioration.
Le procédé de transcodage peut éventuellement comprendre une étape de compensation de mouvement, non représentée ici. L'étape de compensation de mouvement comprend en série une sous-étape de stockage en mémoire des erreurs de codage relatives à des images courante et précédente et qui sont issues de l'étape de reconstruction (221) qui comprend alors une étape de transformation inverse IDCT en série avec l'étape de soustraction (223). Elle comprend également les sous-étapes de compensation de mouvement, de transformation DCT, et d'addition des signaux issus de la transformation DCT et de l'étape de décodage d'erreur (201) afin de fournir des données intermédiaires à l'étape de premier ré-encodage (211).

Le procédé de copie de données numériques compressées selon la présente invention comprend avantageusement une étape de contrôle apte à activer (ou désactiver) l'étape de suppression si une indication de protection est (ou n'est pas) insérée dans les données numériques compressées. L'indication de protection indique si des droits de propriété intellectuelle sont présents dans les données numériques compressées et peut être insérée, par exemple, dans l'entête de la couche de base. Elle peut aussi être avantageusement insérée selon un principe de tatouage (en anglais 'watermarking'). Selon ce principe, un signal de tatouage, correspondant à l'indication de protection est ajouté aux données numériques compressées. Pour des données numériques compressées de type MPEG, le signal de tatouage est ajouté aux coefficients DCT contenus dans le flux de données numériques compressées lors du codage. Un tel procédé permet de marquer le flux de données numériques compressées à la volée lors du codage. Le signal de tatouage étant de faible amplitude, la qualité du signal n'est pas altéré et le nombre de bits nécessaires pour compresser les données numériques d'origine n'est pas ou peu augmenté. Une indication de protection sous cette forme est de surcroît particulièrement robuste vis à vis d'une attaque par un pirate informatique (en anglais 'hacker').

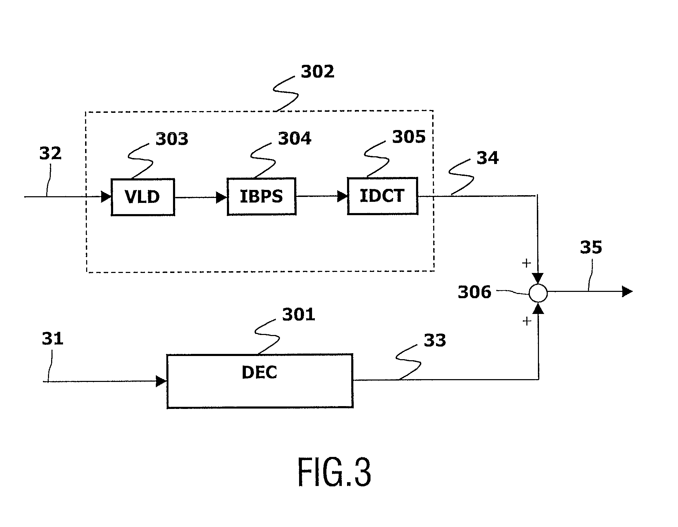

La Fig. 3 décrit un procédé de décodage de données numériques compressées selon un format de compression échelonnable. Elle est décrite plus précisément dans la norme FGS et ne fait pas partie de la présente invention mais permet de mieux comprendre l'exploitation du signal numérique multimédia copié selon le procédé de copie selon l'invention. Le procédé de décodage consiste d'une part à décoder la couche de base (31) et d'autre part à décoder l'ensemble des couches d'amélioration (32). La couche de base est décodée par une étape de décodage standard DEC (301) qui délivre une couche de base décodée (33). L'ensemble des couches d'amélioration est décodée par une étape de décodage hybride (302) qui comprend en série les sous-étapes de décodage à longueur variable VLD (303), de décalage vers la droite IBPS (304) de bits appartenant aux coefficients DCT en fonction de leur fréquence, de transformation inverse IDCT (305) afin d'obtenir un ensemble de couches d'amélioration décodé (34). Le signal numérique multimédia décodé (35) résulte alors de l'addition (306) de la couche de base décodée (33) et de l'ensemble de couches d'amélioration décodé (34).

Le procédé de copie de données numériques compressées peut être mis en oeuvre, dans un circuit intégré de type processeur de signal par exemple, grâce à des moyens matériels ou logiciels ou une combinaison des deux. A titre d'exemple d'implémentation matérielle, le dispositif de copie de données numériques compressées comprend des moyens d'identification de début de fragment ou d'ensemble d'au moins une couche d'amélioration, des moyens de contrôle du nombre de bits copiés de manière à éliminer une partie finale du fragment ou de d'ensemble d'au moins une couche d'amélioration, et des moyens de copie du fragment ainsi tronqué. Le dispositif de copie de données numériques compressées peut notamment être incorporé dans un graveur de disques CD ou DVD ou dans un lecteur-enregistreur de disques DVD.

Il est également possible d'implémenter les étapes du procédé de copie de données numériques compressées au moyen d'un circuit convenablement programmé. Un jeu d'instructions contenu dans une mémoire de programmation peut provoquer le circuit à effectuer les différentes étapes du procédé de copie de données numériques compressées précédemment décrit.

Aucun signe de référence entre parenthèses dans le présent texte ne doit être interprété de façon limitative. Le verbe "comprendre" et ses conjugaisons doivent également être interprétés de façon large, c'est à dire comme n'excluant pas la présence non seulement d'autres éléments ou étapes que ceux listés après ledit verbe, mais aussi d'une pluralité d'éléments ou d'étapes déjà listés après ledit verbe et précédés du mot "un" ou "une".

## Revendications

1. Procédé de copie de données numériques compressées sur un support d'information, **caractérisé en ce que** lesdites données numériques ont été compressées par fragments successifs selon un format de compression échelonnable, un fragment selon ledit format comportant une couche de base et au moins une couche d'amélioration, et **en ce que** ledit procédé comprend une étape de suppression d'une partie de la au moins une couche d'amélioration.

2. Procédé de copie de données numériques compressées selon la revendication 1, **caractérisé en ce que** l'étape de suppression est apte à conserver une fraction de taille prédéterminée de la au moins une couche d'amélioration.

3. Procédé de copie de données numériques compressées selon la revendication 1, **caractérisé en ce que** l'étape de suppression est apte à éliminer une fraction du fragment correspondant à un nombre entier de couches d'amélioration.

4. Procédé de copie de données numériques compressées selon la revendication 1, caractérisé en qu'il comprend une étape de transcodage de données numériques compressées selon un format de compression non-échelonnable de manière à fournir les données numériques compressées selon le format de compression échelonnable.

5. Procédé de copie de données numériques compressées selon la revendication 1, **caractérisé en ce qu'**il comprend une étape de contrôle apte à activer l'étape de suppression si une indication de protection est insérée dans les données numériques compressées.

6. Procédé de copie de données numériques compressées selon la revendication 5, **caractérisé en ce que** l'indication de protection est insérée dans les données numériques compressées selon un principe de tatouage.

7. Dispositif de copie de données numériques compressées sur un support d'information, **caractérisé en ce que** lesdites données numériques ont été compressées par fragments successifs selon un format de compression échelonnable, un fragment comportant une couche de base et un ensemble d'au moins une couche d'amélioration, et **en ce que** ledit dispositif comprend des moyens d'identification de début de l'ensemble d'au moins une couche d'amélioration, et des moyens de contrôle apte à éliminer une partie dudit ensemble.

8. Produit "programme d'ordinateur" pour enregistreur de données numériques comprenant un jeu d'instructions qui, lorsqu'elles sont chargées dans un circuit dudit enregistreur, amène celui-ci à effectuer le procédé de copie de données numériques selon l'une des revendications 1 à 6.
